# EUROPÄISCHE PATENTSCHRIFT

(11) **EP 2 257 713 B1**
(45) Veröffentlichungstag und Bekanntmachung des Hinweises auf die Patenterteilung: **02.04.2014**
(21) Anmeldenummer: 09714562.7
(22) Anmeldetag: 23.01.2009
(51) Int. Cl.: F16B 4/00, F16B 21/18, B21K 25/00, B23P 11/00, B62D 6/10, F16D 1/072, G01D 11/30, F16B 21/20

(54) **VORRICHTUNG UND VERFAHREN ZUM BEFESTIGEN EINER HÜLSE AUF EINER WELLE**
DEVICE AND METHOD FOR ATTACHING A SLEEVE TO A SHAFT
DISPOSITIF ET PROCÉDÉ DE FIXATION D'UNE DOUILLE SUR UN ARBRE

(30) Priorität: 27.02.2008 DE 102008011467
(43) Veröffentlichungstag der Anmeldung: 08.12.2010
(73) Patentinhaber: Robert Bosch GmbH, 70442 Stuttgart (DE)
(72) Erfinder: WAIBLER, Matthias, 73630 Remshalden-Hebsack (DE); BURKHARDT, Klaus, 71679 Asperg (DE); HOLZ, Dieter, 71563 Affalterbach (DE)
(86) Internationale Anmeldenummer: PCT/EP2009/050737
(87) Internationale Veröffentlichungsnummer: WO 2009/106390

(56) Entgegenhaltungen:
- WO-A-2008/068095
- DE-A1- 19 908 459
- DE-A1-102005 011 196
- DE-U1- 8 815 130
- GB-A- 2 042 124
- US-A- 2 140 442
- US-A- 2 483 013

## Beschreibung

### Stand der Technik

Die Erfindung geht aus von einem Befestigungssystem und einem Verfahren zum Befestigen einer Hülse auf einer Welle nach der Gattung der unabhängigen Ansprüche. Aus der DE-A-19908459 ist bereits ein Drehmomentsensor bekannt, der einen Torsionsstab, eine erste Drehwelle, eine zweite Drehwelle, die koaxial zur ersten Drehwelle angeordnet ist und mit der ersten Drehwelle über den Torsionsstab verbunden ist und ein zylindrisches Teil enthält, das an einem Endabschnitt der ersten Drehwelle befestigt ist, sodass es zumindest einen Teil der zweiten Drehwelle umschließt, um dadurch ein Drehmoment, basierend auf einem Überlappungszustand des zylindrischen Teils mit der zweiten Drehwelle, zu erfassen. Am Endabschnitt der ersten Drehwelle sind eine Vielzahl von sich in axialer Richtung erstreckenden Nuten angeordnet. Weiterhin weist das zylindrische Teil an der inneren Fläche Vorsprünge auf, in die sich in axiale Richtung erstreckende Nuten eingesetzt sind, um dadurch eine Drehung des zylindrischen Teils relativ zur ersten Drehwelle zu verhindern.

Aus der DE 88 15 130 U ist eine Montagebuchse, insbesondere für einen stabförmigen elektromagnetischen Sensor, bekannt. Eine Buchse weist eine Vielzahl von Öffnungen auf, die gleichen Winkelabstand voneinander haben und im Wesentlichen eine viereckige Form aufweisen. Von jeder Öffnung erstreckt sich jeweils eine länglich federnde Zunge, die gewölbt oder zurückgebogen ist, wobei die konkave Seite nach außen gerichtet ist. Ein Sensorkörper wird in die Buchse eingeführt, sodass die federnden Zungen der Buchse elastisch gegen die Wände des Sitzes gepresst werden. Dadurch verhindern die Flügel das Herausrutschen oder die axiale Verschiebung des Sensors relativ zum Sitz.

Der Erfindung liegt die Aufgabe zugrunde, eine kostengünstigere und einfacher zu fertigende Verbindung zwischen einer Hülse und einer Welle zu erreichen. Diese Aufgabe wird gelöst durch die Merkmale der unabhängigen Ansprüche.

### Offenbarung der Erfindung

Erfindungsgemäßes Befestigungssystem und erfindungsgemäßes Verfahren zum Befestigen einer Hülse auf einer Welle gemäß den Merkmalen der unabhängigen Ansprüche haben demgegenüber den Vorteil, dass eine einfache und kostengünstige Bauform von Hülse und Welle gefunden wurde, die zum einen die notwendige Festigkeit erzielt, die andererseits jedoch eine gewisse Feinjustage der Bauteile zueinander ermöglicht. So können Hülse und Welle durch eine Presspassung gefügt werden. Die anschließende Feinjustage ist sowohl rotatorisch um die Welle als auch translatorisch entlang der Wellenachse möglich unter Beibehaltung der hervorragenden Konzentrizität der Bauteile zueinander, wie sie nur eine Presspassung leistet. Weiterhin wird die Verwendung einer Übergangspassung vermieden, da sonst eine zusätzliche Fixierung, beispielsweise ein Schweißpunkt oder ähnliches, der Bauteile in Endlage erforderlich wäre. Dies wird dadurch möglich, dass die Reibfläche der zu fügenden Bauteile, hier Hülse und Welle, in der Presspassung soweit reduziert wird, dass eine nachträgliche Feinjustage ermöglicht wird. Andererseits ist die Fläche so zu wählen, dass der Reibschluss immer noch ausreicht, um die Funktion bzw. Position der Bauteile über die Betriebsdauer zu gewährleisten.

Hierzu sind zumindest drei Sicken vorgesehen, die auf der Innenseite der Hülse nach innen überstehen zur entsprechenden Reibflächenverbindung mit der Welle. Dadurch stellt die Kontaktfläche der Presspassung nicht mehr die komplette Zylinderfläche dar, sondern wird auf die mindestens drei Sickenflächen reduziert. Dadurch kann die Umfangssteifigkeit der Hülse reduziert werden, wodurch die Vorspannung der Hülse auf die Welle ebenfalls vermindert wird. Dadurch lässt sich über die Geometrie der Sicken die Reibfläche und somit die Fügekraft bei gleichzeitig hoher Positioniergenauigkeit stark reduzieren. Die Sicken werden nun ihrerseits zur Krafteinleitung nach erfolgtem Füge/Pressvorgang genutzt, um die Feinjustage der Bauteile zueinander durchzuführen.

Hierzu ist vorgesehen, dass die Sicke in einer umlaufenden Nut auf der Welle verstemmt wird. In dieser Möglichkeit kann nach dem Einstellen der Hülsenposition gegenüber der Welle ein mechanischer Formschluss hergestellt werden, welcher jede weitere Positionsveränderung verhindert.

In einer zweckmäßigen Weiterbildung ist vorgesehen, dass mit Hilfe eines formschlüssigen Werkzeugs die Hülse beispielsweise rotatorisch gegenüber der Welle eingestellt oder verdreht wird. Dadurch lässt sich in einfacher Weise eine Feinjustage durchführen.

In einer zweckmäßigen Weiterbildung ist vorgesehen, dass zwischen einem Teil der Hülse und einem Teil der Sicke zumindest eine Ausnehmung vorgesehen ist, beispielsweise erzeugt durch eine Freistanzung. Dadurch kann weiter der Reibschluss reduziert werden. Auch die Einstelldrehmomente können zurückgeführt werden.

In einer zweckmäßigen Weiterbildung ist vorgesehen, dass die Ausnehmung zwischen Hülse und Sicke im Wesentlichen U-förmig ausgebildet ist an drei Seiten. Hierdurch kann die Reibkraft weiter reduziert werden. Außerdem kann diese Form durch eine Freistanzung leicht hergestellt werden.

Weitere zweckmäßige Weiterbildungen ergeben sich aus weiteren abhängigen Ansprüchen und aus der Beschreibung.

### Zeichnung

Mehrere Ausführungsbeispiele der Hülse und des Verfahrens zum Befestigen einer Hülse auf einer Welle sind in der Zeichnung dargestellt und werden nachfolgend beschrieben.

Es zeigen:
Die Figur 1 eine perspektivische Ansicht auf die Hülse mit Sicken,
die Figur 2 einen Schnitt der auf der Welle montierten Hülse,
die Figur 3 eine Draufsicht auf die montierte Anordnung,
die Figur 4 einen vergrößerten Ausschnitt nach Figur 3,
die Figur 5 eine Draufsicht auf die montierte Anordnung zur Feinjustage,
die Figur 6 eine Vergrößerung gemäß Figur 3 zusammen mit einem Werkzeug zur Drehmomenteinleitung,
die Figur 7 die Draufsicht auf eine Hülse gemäß einem weiteren Ausführungsbeispiel,
die Figur 8 eine perspektivische Darstellung der Hülse mit Welle gemäß Figur 7,
die Figur 9 eine perspektivische Darstellung eines weiteren Ausführungsbeispiels der Hülse,
die Figur 10 ein weiteres Ausführungsbeispiel der auf die Welle montierten Hülse,
die Figur 11 einen Schnitt durch das Ausführungsbeispiel gemäß Figur 10,
sowie Figur 12 eine Schnittdarstellung durch einen Drehmomentsensor mit auf der Welle befestigter Hülse.

Eine Hülse 10 ist als rohrförmiges, zylinderförmiges Teil ausgeführt. Die Hülse 10 weist in axialer Richtung erstreckend drei Sicken 12 auf, die an der Innenseite der Hülse 10 leicht überstehen. Am Rand der Hülse 10 erstreckt sich ein flanschförmiger Teller 11.

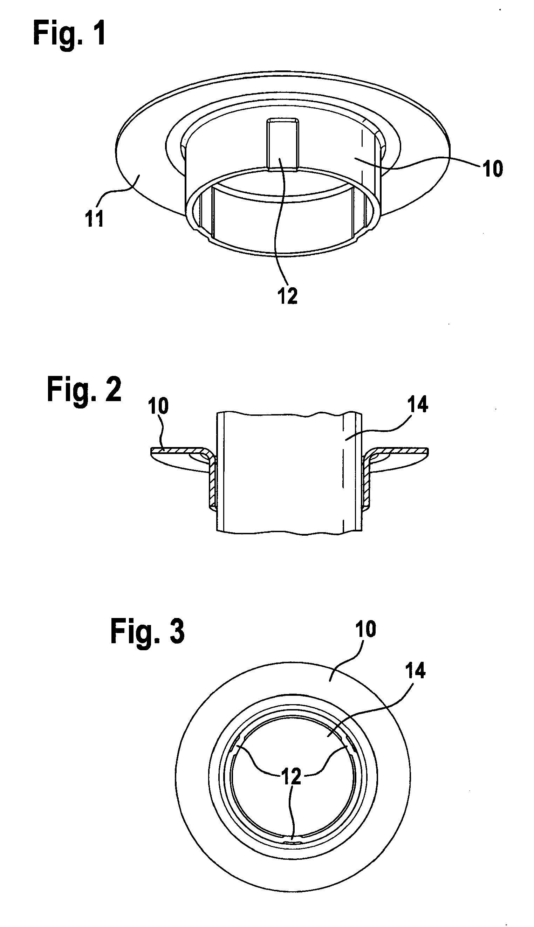

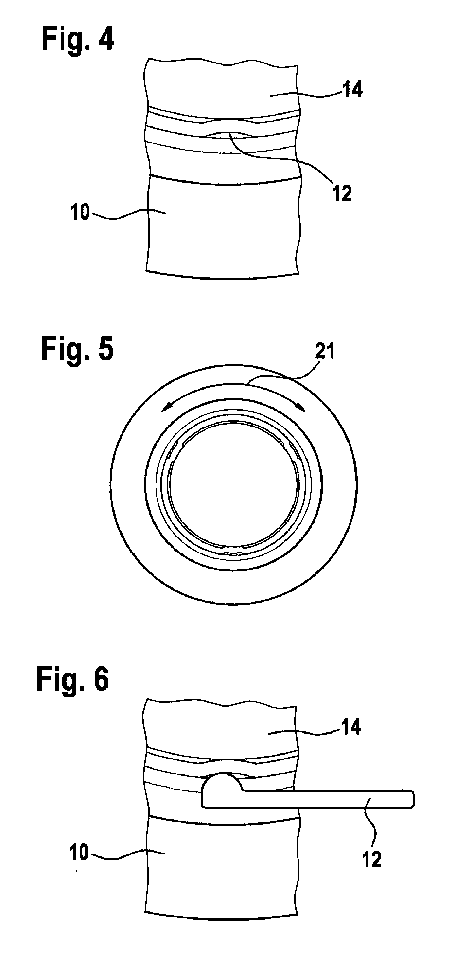

Gemäß Figur 2 wird ein zylinderförmiger Körper 14, nämlich die Welle, von der Hülse 10 umgeben. Aus der Draufsicht der Anordnung nach Figur 2 lässt sich erkennen, dass Geometrien von Hülse 10 und den nach innen überstehenden Sicken 12 so gewählt sind, dass die Außenflächen des zylinderförmigen Körpers 14 in innen liegenden Oberflächen der Sicken 12 reibschlüssige Verbindungen eingehen. Dadurch ergibt sich eine deutlich reduzierte Auflagefläche durch die Sicken 12. Dies wird nochmals durch Figur 4 hervorgehoben, aus der hervorgeht, dass die Welle 14 lediglich an den nach innen überstehenden Flächen der Sicken 12 aufliegt. Gemäß Figur 6 ist zumindest ein Werkzeug 20 vorgesehen, dessen Endabschnitt so ausgebildet ist, dass er von aussen in die Sicke 12 eingreift. Das Werkzeug 20 weist somit einen Formschluss zur Sicke 12 auf, um Drehmomente oder Kräfte einzuleiten. Mit Hilfe des formschlüssigen Werkzeugs 20 lässt sich die Hülse 10 beispielsweise rotatorisch gegenüber dem Zylinder 14 einstellen oder verdrehen.

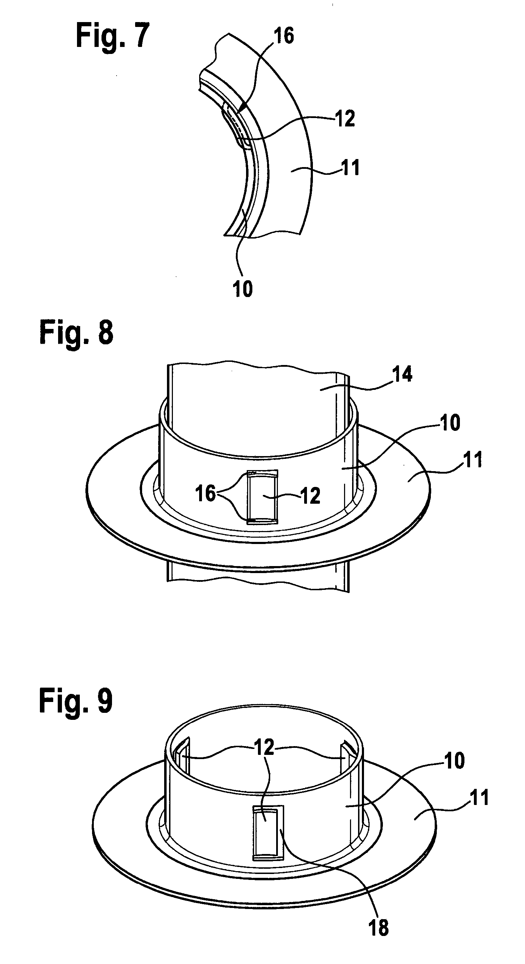

Bei dem Ausführungsbeispiel gemäß Figur 7 wird die Sicke 12 durch zwei Ausnehmungen 16 begrenzt, in axialer Richtung versetzt zueinander angeordnet. Die Ausnehmungen 16 können beispielsweise durch Freistanzen gebildet werden. Die Ausnehmungen 16 bewirken, dass sich die Sicke 12 leichter verformen lässt. Weiterhin wird dadurch der Reibschluss reduziert. Außerdem können auch die Einstelldrehmomente geringer gewählt werden, da die Innenfläche der Sicke 12 eine geringere Kraft auf die Außenseite der Welle 14 aufbringt.

Bei dem Ausführungsbeispiel gemäß Figur 9 ist nun eine U-förmige Ausnehmung 18 vorgesehen, die die Sicke 12 an drei Seiten begrenzt. Durch diese Bauform kann die Reibkraft weiter reduziert werden.

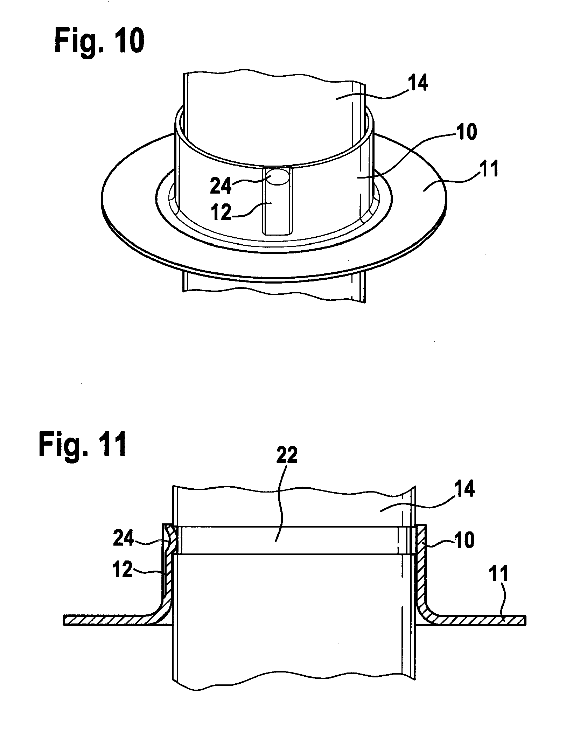

Bei dem Ausführungsbeispiel gemäß Figur 10 wird die Sicke 12 verstemmt, wie mit der kugelförmig nach innen ragenden liegenden Oberfläche 24 angedeutet. Die Verstemmung 24 wirkt zusammen mit einer in radialer Richtung umlaufenden Nut 22, die im zylinderförmigen Körper 14 vorgesehen ist. Nach dem Einstellen der Hülsenposition kann ein mechanischer Formschluss hergestellt werden, indem die Sicke 12 verstemmt wird. Dadurch wird jede weitere Positionsveränderung verhindert.

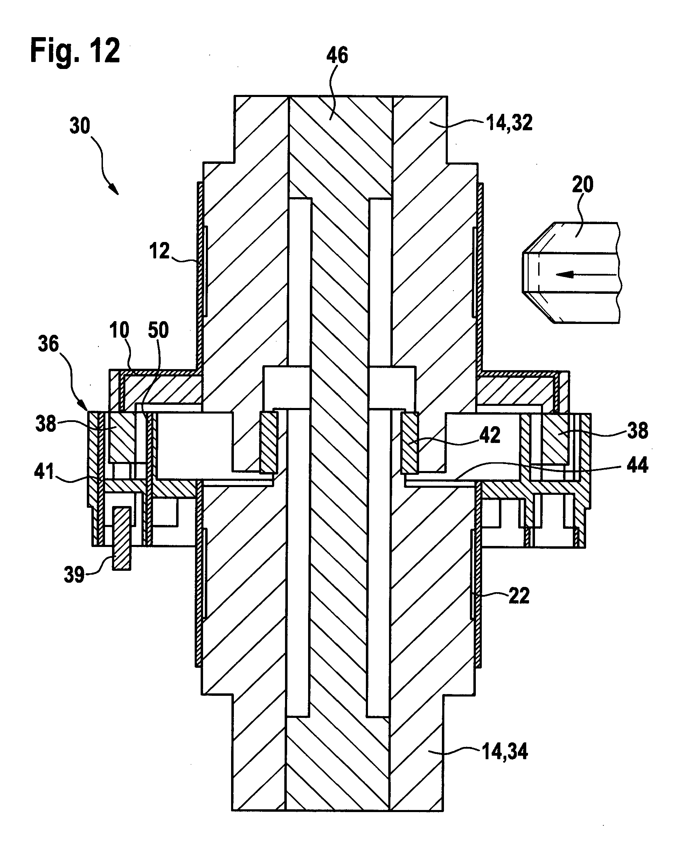

Vorrichtung und Verfahren zum Befestigen der Hülse 10 auf der Welle 14 eignen sich insbesondere bei einem Drehmomentsensor 30, wie er exemplarisch in Figur 12 gezeigt ist. In Figur 12 ist mit 30 ein Drehmomentsensor bezeichnet, der beispielsweise zur Erfassung des Lenkmoments in die Lenkwelle eines Kraftfahrzeugs integriert ist. Hierzu ist die Welle 14 in eine Eingangswelle 32 und eine Ausgangswelle 34 unterteilt, zwischen denen eine Sensoranordnung 36 mit einer magnetischen Gebereinheit 38 und einer Fluxringeinheit 50 angeordnet ist, zur Erfassung der Veränderung des magnetischen Flusses durch einen Sensor 39 bei einer Verdrehung der beiden Wellenteile gegeneinander. Weiterhin ist zwischen die Eingangswelle 32 und die Ausgangswelle 34 ein Lager 42 eingefügt sowie eine Klauenkupplung 44, welche den Verdrehwinkel zwischen den beiden Wellenteilen begrenzt. Das an der Eingangswelle 32 anliegende Drehmoment wird dabei bis zum Erreichen des durch die Klauenkupplung 44 begrenzten Verdrehwinkels von beispielsweise +/- 6 Grad durch einen Torsionsstab 46 übertragen, welcher mit beiden Wellenteilen 32, 34 fest verbunden ist. Eine derartige Anordnung ist grundsätzlich bekannt und beispielsweise in der Patentanmeldung DE 102005011196 detailliert beschrieben, auf welche hinsichtlich der Ausführungsform des Anmeldungsgegenstandes Bezug genommen wird.

Die Vorrichtung und das Verfahren dienen zur dauerhaften und räumlich exakten Befestigung der Hülse 10 auf der Eingangswelle 32 (bzw. allgemein Welle 14), bzw. einer Hülse 10 auf der Ausgangswelle 34. Die Wellen 32, 34 können jeweils im Bereich der Hülsen 10 eine nutförmige Kontur gemäß Figur 11 aufweisen. In diese Nut 22 kann die Sicke 12 der Hülse 10 mittels Verstemmung 24 formschlüssig verbunden werden in der Weise, dass jede weitere Positionsveränderung verhindert wird.

Eine Pressverbindung zwischen Hülse 10 und Welle 14 wird wie folgt hergestellt. Zuerst wird die Hülse 10 mit nach innen ragenden Sicken 12 über die Welle 14 gestülpt. Hierzu könnte das Werkzeug 20 so ausgebildet sein, dass es formschlüssig in die Vertiefungen der Sicken 12 an der Außenseite der Hülse 10 formschlüssig eingreift und so die Hülse 10 auf die Welle 14 aufschiebt. Im nächsten Schritt wird die korrekte relative Position der Hülse 10 zur Welle 14 eingestellt. Dies kann beispielsweise durch Verdrehung 21 oder Verschiebung in axialer Richtung erfolgen. Hierzu kann das formschlüssige Werkzeug 20 verwendet werden. Sowohl ein axialer als auch ein rotatorischer Versatz könnte erreicht werden, um die korrekte Position einzustellen. In einem optionalen weiteren Schritt kann die Sicke 12 mit der Welle 14 verstemmt werden. Dies ist insbesondere gemäß Figur 10 und Figur 11 in Verbindung mit der auf der Welle 14 vorgesehenen Nut 22 zweckmäßig. Dadurch kann eine weitere Positionsveränderung verhindert werden.

## Patentansprüche

1. Befestigungssystem zur Befestigung einer Hülse (10) auf einer Welle (14), umfassend zumindest die Hülse (10) und die Welle, wobei die Hülse (10) zumindest drei Sicken (12) aufweist zur Verbindung der Hülse (10) mit der Welle (14), wobei die Sicken (12) so ausgebildet sind, dass sie auf der Innenseite der Hülse (10) etwas hineinragen und so eine Auflagefläche für die Welle (14) bildet, wobei zur formschlüssigen Verbindung mit der Welle (14) eine Verstemmung (24) der Sicke (12) vorgesehen ist, die mit einer Ausnehmung (22) an der Welle (14) zusammenwirkt.

2. Befestigungssystem nach einem der vorhergehenden Ansprüche, **dadurch gekennzeichnet, dass** zumindest eine Ausnehmung (16, 18) an der Hülse (10) vorgesehen ist in der Nähe der Sicke (12).

3. Befestigungssystem nach Anspruch 2, **dadurch gekennzeichnet, dass** die Ausnehmung (18) im Wesentlichen U-förmig ausgebildet ist.

4. Befestigungssystem nach einem der vorhergehenden Ansprüche, **dadurch gekennzeichnet, dass** die Welle (14) mit einer umlaufenden Nut (22) versehen ist zur Aufnahme der Verstemmung (24) der Sicke (12).

5. Verfahren zur Befestigung einer Hülse (10) auf einer Welle (14), wobei die Hülse (10) zumindest drei Sicken (12) aufweist, wobei die Sicken (12) so ausgestaltet sind, dass die Auflageflächen auf der Innenseite der Hülse (10) etwas überstehen zur Erreichung einer Pressverbindung mit der Welle (14), **gekennzeichnet durch** folgende Schritte:
- Aufschieben der Hülse (10) auf die Welle (14),
- Feinpositionieren der Welle (14) relativ zur Hülse (10)
- Verstemmen der Sicken (12) mit der Welle (14), indem die Verstemmung (24) mit einer Ausnehmung der Welle (14) zusammenwirkt.

6. Verfahren nach Anspruch 5, **dadurch gekennzeichnet, dass** zur Feinpositionierung ein Werkzeug (20) vorgesehen ist, welches formschlüssig zumindest in einer der Sicken (12) angeordnet wird.

## Claims

1. Fastening system for fastening a sleeve (10) to a shaft (14), comprising at least the sleeve (10) and the shaft, the sleeve (10) having at least three beads (12) for connecting the sleeve (10) to the shaft (14), the beads (12) being formed such that they protrude somewhat on the inside of the sleeve (10) and thus constitute a bearing surface for the shaft (14), a caulking (24) of the bead (12), which caulking cooperates with a recess (22) on the shaft (14), being provided for positive connection to the shaft (14).

2. Fastening system according to the preceding claim, **characterized in that** at least one recess (16, 18) is provided, in the vicinity of the bead (12), on the sleeve (10).

3. Fastening system according to Claim 2, **characterized in that** the recess (18) is of essentially U-shaped form.

4. Fastening system according to one of the preceding claims, **characterized in that** the shaft (14) is provided with a peripheral groove (22) for the reception of the caulking (24) of the bead (12).

5. Method for fastening a sleeve (10) to a shaft (14), the sleeve (10) having at least three beads (12), the beads (12) being configured such that the bearing surfaces protrude somewhat on the inside of the sleeve (10) in order to achieve a press connection to the shaft (14), **characterized by** the following steps:
- pushing of the sleeve (10) onto the shaft (14),
- fine positioning of the shaft (14) in relation to the sleeve (10),
- caulking of the beads (12) with the shaft (14) in that the caulking (24) cooperates with a recess of the shaft (14).

6. Method according to Claim 5, **characterized in that** for fine positioning, a tool (20) is provided which is arranged positively at least in one of the beads (12).

## Revendications

1. Système de fixation pour la fixation d'une douille (10) sur un arbre (14), comprenant au moins la douille (10) et l'arbre, la douille (10) présentant au moins trois moulures (12) pour connecter la douille (10) à l'arbre (14), les moulures (12) étant réalisées de telle sorte qu'elles s'enfoncent quelque peu du côté intérieur de la douille (10) et qu'il se forme ainsi une surface d'appui pour l'arbre (14), un matage (24) de la moulure (12) étant prévu pour la connexion par engagement par correspondance de forme avec l'arbre (14), lequel matage coopère avec un évidement (22) sur l'arbre (14).

2. Système de fixation selon la revendication précédente, **caractérisé en ce qu'**au moins un évidement (16, 18) est prévu sur la douille (10) à proximité de la moulure (12).

3. Système de fixation selon la revendication 2, **caractérisé en ce que** l'évidement (18) est réalisé essentiellement en forme de U.

4. Système de fixation selon l'une quelconque des revendications précédentes, **caractérisé en ce que** l'arbre (14) est pourvu d'une rainure périphérique (22) pour recevoir le matage (24) de la moulure (12).

5. Procédé de fixation d'une douille (10) sur un arbre (14), dans lequel la douille (10) présente au moins trois moulures (12), les moulures (12) étant configurées de telle sorte que les surfaces d'appui dépassent quelque peu du côté intérieur de la douille (10) afin de réaliser une connexion par pressage avec l'arbre (14), **caractérisé par** les étapes suivantes :
- enfoncement de la douille (10) sur l'arbre (14),
- positionnement précis de l'arbre (14) par rapport à la douille (10),
- matage des moulures (12) avec l'arbre (14), le matage (24) coopérant avec un évidement de l'arbre (14).

6. Procédé selon la revendication 5, **caractérisé en ce que** pour le positionnement précis, on prévoit un outil (20) qui est disposé par engagement par correspondance de forme au moins dans l'une des moulures (12).
